# EUROPÄISCHE PATENTANMELDUNG

(11) **EP 4 477 839 A2**
(43) Veröffentlichungstag der Anmeldung: **18.12.2024**
(21) Anmeldenummer: 24155912.9
(22) Anmeldetag: 06.02.2024
(51) Int. Cl.: F01D 5/14

(54) **VERFAHREN ZUR FESTLEGUNG DER FORM EINER VERSTIMMTEN SCHAUFEL EINES LAUFRADS EINER STRÖMUNGSMASCHINE**

(30) Priorität: 06.02.2023 DE 102023102798
(71) Anmelder: Rolls-Royce Deutschland Ltd & Co KG, 15827 Blankenfelde-Mahlow (DE)
(72) Erfinder: FIGASCHEWSKI, Felix, 15827 Blankenfelde-Mahlow (DE); GIERSCH, Thomas, 15827 Blankenfelde-Mahlow (DE); WIRTH, Moritz, 15827 Blankenfelde-Mahlow (DE); NIPKAU, Jens, 15827 Blankenfelde-Mahlow (DE); HEMERLY, Christopher, 15827 Blankenfelde-Mahlow (DE)

(57) **Zusammenfassung**

Ein Aspekt der Erfindung betrifft ein Verfahren zur Festlegung der Form einer verstimmten Schaufel eines Laufrads einer Strömungsmaschine. Das Verfahren umfasst: Bereitstellen (111) einer nominalen Schaufel (4), die eine Vielzahl radial aufgefädelter Profilelemente (41) aufweist; Bereitstellen (112) einer initial verstimmten Schaufel (5), die eine Vielzahl radial aufgefädelter Profilelemente (51) aufweist, wobei die initial verstimmte Schaufel (5) verglichen mit der nominalen Schaufel bei mindestens einem der Profilelemente (51) eine reduzierte oder erhöhte Dicke (Δt) aufweist; Bestimmen (113) der Form der nominalen Schaufel (4) im heißen Zustand der nominalen Schaufel; Bestimmen (114) der Form der initial verstimmten Schaufel (5) im heißen Zustand der initial verstimmten Schaufel; Vergleichen (115) der beiden im heißen Zustand bestimmten Formen und Bestimmen mindestens eines Parameters (γ) der initial verstimmten Schaufel (5), dessen Wert sich von dem entsprechenden Parameterwert bei der nominalen Schaufel (4) im heißen Zustand unterscheidet; und Ändern (116) des Werts dieses Parameters (γ) bei der initial verstimmten Schaufel (5) im kalten Zustand derart, dass ein Unterschied zwischen den Werten dieses Parameters (γ) bei der verstimmten Schaufel (5) und der nominalen Schaufel (4) im heißen Zustand nicht mehr gegeben ist. Die Erfindung betrifft auch eine nach einem solchen Verfahren hergestellte Schaufel eines Laufrads.

## Beschreibung

Die Erfindung betrifft Verfahren zur Festlegung der Form einer verstimmten Schaufel eines Laufrads einer Strömungsmaschine und nach diesen Verfahren hergestellte Schaufeln.

Es ist bekannt, Laufräder von Strömungsmaschinen aktiv zu verstimmen, d.h. den Laufschaufeln zusätzlich zu fertigungsbedingten und damit zufälligen Abweichungen der Schaufeleigenfrequenzen gezielte Abweichungen der Schaufeleigenfrequenzen aufzuprägen. Durch die gezielte Verstimmung eines Laufrads werden bestimmte Schwingungsanregungen des Laufrads reduziert. Eine Möglichkeit der Verstimmung besteht dabei darin, gezielt Dickenänderungen an den Schaufeln vorzunehmen. Dies ist beispielsweise in P. Gudmundson: "Tuning of Turbine Blades: A Theoretical Approach", Journal of Engineering for Power, ISSN 0022-0825, Vol. 105, Nr. 2, S. 249-255, 1983, beschrieben.

Es ist zu beachten, dass die Schaufel eines Laufrads im Betrieb, wenn das Laufrad rotiert, sich aufgrund der Zentrifugalkraft aufrichtet. Eine an einer Schaufel zu deren Verstimmung durchgeführte Dickenänderung ändert nicht nur die dynamischen Eigenschaften (Schwingungsfrequenzen), sondern auch die statischen Eigenschaften (Torsionssteifigkeit und rotierende Masse) und die aerodynamischen Profile. Die Änderung der statischen Eigenschaften führt dazu, dass die Schaufel im aufgerichteten Zustand (im sogenannten "hot shape") eine Designänderung im Vergleich zum kalten Zustand der Schaufel (wenn das Laufrad nicht rotiert) erfährt. Eine solche Designänderung kann den Wirkungsgrad negativ beeinflussen.

Der vorliegenden Erfindung liegt die Aufgabe zugrunde, Verfahren zur Festlegung der Form einer verstimmten Schaufel eines Laufrads einer Strömungsmaschine anzugeben, wobei die gewünschte Form negative Effekte der Schaufelform im heißen Zustand, die auf eine Dickenänderung der Schaufel im kalten Zustand zurückzuführen sind, vermeidet. Des Weiteren soll eine entsprechende Schaufel eines Laufrads bereitgestellt werden.

Diese Aufgabe wird durch ein Verfahren mit den Merkmalen des Patentanspruchs 1, ein Verfahren mit den Merkmalen des Anspruchs 15 und eine Schaufel mit den Merkmalen des Patentanspruchs 18 gelöst. Ausgestaltungen der Erfindung sind in den abhängigen Ansprüchen angegeben.

Danach betrachtet die Erfindung in einem ersten Erfindungsaspekt ein Verfahren zur Festlegung der Form einer verstimmten Schaufel eines Laufrads einer Strömungsmaschine. Das Verfahren umfasst die folgenden Schritte:
- Bereitstellen einer nominalen Schaufel, die eine Vielzahl radial aufgefädelter Profilelemente aufweist,
- Bereitstellen einer initial verstimmten Schaufel, die eine Vielzahl radial aufgefädelter Profilelemente aufweist, wobei die initial verstimmte Schaufel verglichen mit der nominalen Schaufel bei mindestens einem der Profilelemente eine reduzierte oder erhöhte Dicke aufweist,
- Bestimmen der Form der nominalen Schaufel im heißen Zustand der nominalen Schaufel,
- Bestimmen der Form der initial verstimmten Schaufel im heißen Zustand der initial verstimmten Schaufel,
- Vergleichen der beiden im heißen Zustand bestimmten Formen und Bestimmen mindestens eines Parameters der initial verstimmten Schaufel, dessen Wert sich von dem entsprechenden Parameterwert bei der nominalen Schaufel im heißen Zustand unterscheidet,
- Ändern des Werts dieses Parameters bei der initial verstimmten Schaufel im kalten Zustand derart, dass ein Unterschied zwischen den Werten dieses Parameters bei der verstimmten Schaufel und der nominalen Schaufel im heißen Zustand nicht mehr gegeben ist. Dabei bildet die initial verstimmte Schaufel mit dem mindestens einen geänderten Parameter eine final verstimmte Schaufel.

Die erfindungsgemäße Lösung beruht auf dem Gedanken, die Folgen einer Dickenänderung einer Schaufel, die sich im heißen Zustand der Schaufel ergeben, dadurch zu vermeiden, dass die Schaufel im kalten Zustand bereits derart geformt wird, dass sich die unerwünschte Folge im heißen Zustand gar nicht erst einstellt. Dies erfolgt durch eine entsprechende Änderung des Parameters bei der initial verstimmte Schaufeln im kalten Zustand. Das sich bei Aufrichten der Schaufel im heißen Zustand ergebene unerwünschte Design wird somit gewissermaßen durch eine im Ergebnis inverse Änderung des Designs im kalten Zustand vermieden. Die erfindungsgemäße Lösung minimiert somit die nachteiligen Auswirkungen auf den aerodynamischen Wirkungsgrad und die Geräuschentwicklung, wenn eine rotierende Schaufel einer Turbomaschine mit einer Frequenzverstimmung versehen wird.

Es werden in Ausgestaltungen die Art und Weise, wie die Profilelemente übereinander gestapelt werden, und/oder der Staffelungswinkel im kalten Zustand korrigiert, wie noch ausgeführt wird.

Es wird darauf hingewiesen, dass das Merkmal "Form einer Schaufel" breit auszulegen ist. Insbesondere fallen hierunter sämtliche Parameter, die die Schaufel selbst oder deren Ausrichtung an einem Laufrad beeinflussen. Hierunter fallen beispielsweise der Staffelungswinkel, der Schaufelwölbungswinkel, der Inzidenzwinkel, der Deviationswinkel, der Schaufeleintrittswinkel, der Schaufelaustrittswinkel, die Teilung des Schaufelblatts und der engste Querschnitt des Schaufelkanals zwischen zwei Schaufeln. Wenn nur einer dieser Parameter bei einem der Profilelemente geändert wird, liegt eine geänderte Schaufelform bzw. eine - im Vergleich zu einer nominalen Schaufel - verstimmte Schaufel im Sinne der vorliegenden Erfindung vor.

Es wird weiter darauf hingewiesen, dass als Profilelement ein Profilschnitt geringer Dicke durch die Schaufel bezeichnet wird. Dabei ist es bekannt, dass ein Schaufelprofil durch radiales Auffädeln einzelner Profilelemente definiert wird.

Es wird weiter darauf hingewiesen, dass als Schaufel im Sinne der vorliegenden Erfindung primär das Schaufelblatt bezeichnet wird, also diejenige Struktur, die mit einem strömenden Medium interagiert. Die Schaufel kann, je nach Ausgestaltung, zusätzlich weitere Bestandteile aufweisen, beispielsweise eine Schaufelplattform und einen Schaufelfuß, mit dem die Schaufel in einer Rotorscheibe eingeordnet sind. Letztere Bestandteile können die Eigenfrequenz der Schaufel mitbestimmen. Eine erfindungsgemäß vorgesehene Dickenänderung erfolgte jedoch am Schaufelblatt.

Die Schaufel kann in weiteren Ausführungsbeispielen einstückiger Bestandteil eines Laufrads sein, das in BLISK-Bauweise ausgeführt ist, für welchen Fall die Rotorscheibe, die Rotornabe und die Laufschaufeln integral (einstückig) ausgebildet sind (BLISK = "Blade Integrated Disk"), oder das in BLING-Bauweise ausgeführt ist, für welchen Fall die Rotornabe und die Laufschaufeln integral (einstückig) ausgebildet sind (BLING = "Blade Integrated Ring"). Bei einem Laufrad in BLISK-Bauweise oder BLING-Bauweise besteht die Schaufel im Wesentlichen aus dem Schaufelblatt, wobei dieses an mindestens einem axialen Ende in eine strömungsbegrenzende Fläche, zum Beispiel eine Rotornabe übergeht.

Bei der erfindungsgemäß betrachteten Schaufel handelt es sich in Ausführungsbeispielen um die Schaufel eines Fans. Die Erfindung kann jedoch auch bei anderen Laufschaufeln eingesetzt werden, beispielsweise bei Schaufeln einer Verdichterstufe oder einer Turbinenstufe eines Gasturbinentriebwerks.

Eine Ausgestaltung der Erfindung sieht vor, dass der Parameter der initial verstimmten Schaufel, der im heißen Zustand bestimmt wird, der Staffelungswinkel mindestens eines Profilelements der Schaufel ist, wobei der Staffelungswinkel der initial verstimmten Schaufeln im kalten Zustand dahingehend geändert wird, dass die Änderung des Staffelungswinkels im heißen Zustand aufgehoben ist. Durch Korrektur des Staffelungswinkel kann erreicht werden, dass im heißen Zustand der engste Querschnitt zwischen zwei Schaufeln konstant bleibt. Dies ist von Bedeutung, da Abweichungen des engsten Querschnitts von einem Designpunkt dazu führen, dass Verdichtungsstöße stärker geschluckt oder stärker nach außen verschoben werden, so dass der Schaufelkanal zwischen zwei Schaufeln nicht mit der maximalen Effizienz durchströmt werden kann.

Eine Änderung des Staffelungswinkel der initial verstimmten Schaufeln im kalten Zustand erfolgt beispielsweise dahingehend, dass der Staffelungswinkel im kalten Zustand um den Betrag geändert wird, um den er sich im heißen Zustand vom Staffelungswinkel der nominalen Schaufel unterscheidet.

Eine weitere Ausgestaltung sieht vor, dass eine Änderung des Staffelungswinkel der initial verstimmten Schaufel im kalten Zustand iterativ erfolgt, wobei das Verfahren die folgenden Schritte umfasst:
a) in einem ersten Schritt ändern des Staffelungswinkels der initial verstimmten Schaufel im kalten Zustand um einen ersten Betrag,
b) Bestimmen des sich daraus ergebenden Staffelungswinkels der initial verstimmten Schaufel im heißen Zustand,
c) Prüfen, ob die Differenz zwischen dem sich ergebenden Staffelungswinkel im heißen Zustand und dem Staffelungswinkel der nominalen Schaufel im heißen Zustand bis auf einen Restfehler gleich Null ist,
d) wenn nein, Anpassen des Betrags der Änderung des Staffelwinkels der initial verstimmte Schaufeln im kalten Zustand (wobei das Anpassen ein Erhöhen oder ein Reduzieren des Betrags umfassen kann),
e) Wiederholen der Schritte b) bis d), bis die Differenz zwischen dem Staffelungswinkel der verstimmten Schaufel und dem Staffelungswinkel der nominalen Schaufel im heißen Zustand bis auf den Restfehler gleich Null ist.

Dabei kann vorgesehen sein, dass der Staffelungswinkel der verstimmten Schaufel im kalten Zustand um einen Betrag geändert wird, der gleich der Differenz der Staffelungswinkel von verstimmter Schaufel und nominaler Schaufel im heißen Zustand ist.

Ein weiteres Ausführungsbeispiel der Erfindung sieht vor, dass der Parameter der initial verstimmten Schaufel, dessen Wert sich von dem entsprechenden Parameterwert bei der nominalen Schaufel im heißen Zustand unterscheidet, für sämtliche Profilelemente bestimmt wird und eine Korrektur dieses Parameters bei der initial verstimmten Schaufel für sämtliche Profilelemente erfolgt. Die erfindungsgemäße Korrektur der initial verstimmte Schaufeln kann für einige oder sämtliche der Profilelemente erfolgen.

Bei einer Korrektur des Staffelungswinkels der Profilelemente der initial verstimmten Schaufel im kalten Zustand sieht eine Ausgestaltung vor, dass mit zunehmender Spannweite der Staffelungswinkel stärker geändert bzw. korrigiert wird. Die Korrektur des Staffelungswinkels kann dabei linear von der Spannweite bzw. radialen Höhe der Schaufel abhängen oder in anderer Weise von der Spannweite bzw. radialen Höhe abhängig sein. Dies hängt damit zusammen, dass eine Laufschaufel sich typischerweise angrenzend an den Nabenbereich im heißen Zustand weniger aufrichtet und verformt als radial außen liegender Bereiche der Laufschaufel.

Eine weitere Ausgestaltung der Erfindung sieht vor, dass als weiterer Parameter der initial verstimmten Schaufel für zumindest einige der Profilelemente der Schwerpunkt der initial verstimmten Schaufel bestimmt und mit dem Schwerpunkt des entsprechenden Profilelements der nominalen Schaufel verglichen wird. Dabei wird, wenn die Schwerpunkte sich unterscheiden, der Schwerpunkt des Profilelements der initial verstimmten Schaufel durch Verschieben des Profilelements auf den Schwerpunkt der nominalen Schaufel im kalten Zustand verschoben. Dieser Erfindungsaspekt beruht auf dem Gedanken, den Schwerpunkt eines Profilelements, der sich durch die Dickenänderung bzw. das damit verbundene Hinzufügen oder Entfernen von Masse geändert hat, in dem Sinne wiederherzustellen, dass der Schwerpunkt des Profilelements auf den Schwerpunkt zurückgeschoben wird, den das Profilelement bei der nominalen Schaufel aufweist. Durch diese Erfindungsvariante wird eine Formänderung der Schaufel im heißen Zustand, die durch die Dickenänderung verursacht ist, reduziert.

Als Schwerpunkt eines Profilelements wird dessen Massenschwerpunkt betrachtet. Sofern die Massenverteilung innerhalb eines Profilelements homogen ist, stimmt der Massenschwerpunkt mit dem Flächenschwerpunkt des Profilelements überein.

Es kann vorgesehen sein, dass zum Verschieben des Schwerpunkts der initial verstimmten Schaufel das jeweilige Profilelement in axialer Richtung und/oder in Umfangsrichtung verschoben wird. Die axiale Richtung bezieht sich dabei auf die axiale Richtung einer Strömungsmaschine wie zum Beispiel eines Gasturbinentriebwerks, in dem die Schaufel und das Laufrad, an dem die Schaufel angeordnet ist, angeordnet sind. Die Umfangsrichtung bezieht sich auf die Rotationsrichtung des Laufrads, an dem die Schaufel angeordnet ist.

Es wird darauf hingewiesen, dass eine Verschiebung des Schwerpunkts im kalten Zustand der initial verstimmten Schaufel und der nominalen Schaufel bestimmt werden kann. Für die Änderung bzw. Korrektur dieses Parameters ist es somit nicht erforderlich, den heißen Zustand zu betrachten.

Eine weitere Ausgestaltung sieht vor, dass der Schwerpunkt der Profilelemente der initial verstimmten Schaufel mit dem Schwerpunkt des entsprechenden Profilelements der nominalen Schaufel für zumindest diejenigen Profilelemente verglichen wird, bei denen die initial verstimmte Schaufel eine Dickenänderung gegenüber der nominalen Schaufel realisiert, und für diese Profilelemente der Schwerpunkt auf den Schwerpunkt des entsprechenden Profilelements der nominalen Schaufel verschoben wird. Diese Ausgestaltung beruht auf dem Gesichtspunkt, dass eine Korrektur des Schwerpunkts nur für solche Profilelemente erforderlich ist, bei denen eine Dickenänderung bei der verstimmten Schaufel erfolgt ist.

Die erfindungsgemäß betrachtete initial verstimmte Schaufel unterscheidet sich von einer nominalen Schaufel durch Dickenänderungen, die in zumindest einigen der Profilelemente durchgeführt worden sind. Die Art und Position der Dickenänderungen ist für die vorliegende Erfindung jedoch nicht relevant. Grundsätzlich können beliebige Dickenänderungen vorgenommen werden und beliebige Verfahren eingesetzt werden, um geeignete Dickenänderungen im Gesamtprofil zu bestimmen. Eine Ausführungsvariante sieht vor, dass die Dickenänderungen, die zu einer initial verstimmten Schaufel führen, an empfindlichen Bereichen der Schaufel vorgenommen werden, um die erforderliche Frequenzverstimmung in effizienter Weise zu erreichen. Beispielsweise wird zur Bestimmung effizienter Dickenänderungen die Differenz zwischen der Verzerrungsenergie und der kinetischen Energie einer angeregten nominalen Schaufel bestimmt und erfolgt ein Erhöhen oder Reduzieren der Dicke der nominalen Schaufel abhängig von der ermittelten Differenz zwischen der Verzerrungsenergie und der kinetischen Energie in einem betrachteten Bereich. Eine solche Bestimmung der Dickenänderung zur Verstimmung einer nominalen Schaufel ist in der eingangs genannten Publikation P. Gudmundson: "Tuning of Turbine Blades: A Theoretical Approach", Journal of Engineering for Power, ISSN 0022-0825, Vol. 105, Nr. 2, S. 249-255, 1983, beschrieben.

Eine weitere Ausgestaltung sieht vor, dass bei der initial verstimmten Schaufel eine Dickenänderung ausschließlich auf der Druckseite der Schaufel erfolgt. Die Saugseite bleibt von einer Dickenänderung dagegen im Wesentlichen unberührt, so dass die Krümmung der Saugseite unverändert bleibt. Dadurch werden negative Auswirkungen auf die Rotorleistung verhindert.

Eine Ausgestaltung der Erfindung sieht vor, dass das erfindungsgemäße Verfahren als computerimplementiertes Verfahren ausgeführt wird, wobei die einzelnen Verfahrensschritte berechnet werden und erst nach Festlegung der finalen Form der verstimmten Schaufel diese hergestellt wird. Die Durchführung solcher Berechnungen ist dem Fachmann an sich bekannt und erfolgt beispielsweise über die Methode der finiten Elemente. Nach der Berechnung der finalen Form der verstimmten Schaufel kann diese dann mit den ermittelten Parametern in an sich bekannter Weise hergestellt werden (beispielsweise durch Gießen, Herstellung aus Verbundwerkstoff, Sintern, Schmieden, Fräsen oder 3D-Druck).

In einem weiteren Erfindungsaspekt betrifft die vorliegende Erfindung ein weiteres Verfahren zur Festlegung der Form einer verstimmten Schaufel eines Laufrads einer Strömungsmaschine. Das Verfahren umfasst die Schritte:
- Bereitstellen einer nominalen Schaufel, die eine Vielzahl radial aufgefädelter Profilelemente aufweist,
- Bereitstellen einer initial verstimmten Schaufel, die eine Vielzahl radial aufgefädelter Profilelemente aufweist, wobei die initial verstimmte Schaufel verglichen mit der nominalen Schaufel bei mindestens einem der Profilelemente eine reduzierte oder erhöhte Dicke aufweist,
- Bestimmen des Schwerpunkts zumindest der Profilelemente der initial verstimmten Schaufel mit reduzierter oder erhöhter Dicke,
- Bestimmen für die entsprechenden Profilelemente der nominalen Schaufel des Schwerpunkts der Profilelemente,
- Vergleichen der Schwerpunkte der Profilelemente von initial verstimmter Schaufel und nominaler Schaufel,
- wenn die Schwerpunkte sich unterscheiden, Verschieben der Schwerpunkte der Profilelemente der initial verstimmten Schaufel auf die Schwerpunkte der entsprechenden Profilelemente der nominalen Schaufel im kalten Zustand der initial verstimmten Schaufel. Die Schwerpunkte werden dabei durch ein Verschieben der Profilelemente verschoben. Dabei bildet die initial verstimmte Schaufel mit den bezüglich des Schwerpunkts verschobenen Profilelementen eine final verstimmte Schaufel.

Dieser Erfindungsaspekt sieht vor, den Schwerpunkt eines Profilelements, der sich durch die Dickenänderung bzw. das damit verbundene Hinzufügen oder Entfernen von Masse geändert hat, in dem Sinne wiederherzustellen, dass der Schwerpunkt des Profilelementes auf den Schwerpunkt zurückgeschoben wird, den das Profilelement bei der nominalen Schaufel aufweist. Hierdurch wird eine Unwucht der Schaufel im heißen Zustand, die durch die Dickenänderung verursacht wird, verhindert. Die Ermittlung des Schwerpunkts des Profilelements kann dabei im kalten Zustand erfolgen.

Auch für diesen Erfindungsaspekt gilt, dass das erfindungsgemäße Verfahren als computerimplementiertes Verfahren ausgeführt sein kann, wobei die einzelnen Verfahrensschritte berechnet werden und erst nach Festlegung der finalen Form der verstimmten Schaufel diese hergestellt wird.

In einem weiteren Erfindungsaspekt betrifft die vorliegende Erfindung eine Schaufel für ein Laufrad einer Strömungsmaschine. Die Schaufel ist dadurch gekennzeichnet, dass sie durch Ausführen der Schritte des Verfahrens nach Anspruch 1 oder der Schritte des Verfahren nach Anspruch 15 und anschließendem Herstellen der Schaufel entsprechend der durch die Verfahrensschritte festgelegten Form hergestellt wird.

Dabei können bis auf den letzten Schritt des Herstellens der Schaufel sämtliche Herstellungsschritte computerimplementiert ausgeführt sein. Das Herstellen der Schaufel erfolgt in an sich bekannter Weise beispielsweise durch Gießen, Herstellung aus Verbundwerkstoff, Sintern, Schmieden, Fräsen oder 3D-Druck.

In einem weiteren Erfindungsaspekt betrifft die vorliegende Erfindung ein Laufrad einer Strömungsmaschine, das aufweist:
- eine Mehrzahl von Schaufeln, die in Umfangsrichtung des Laufrads aneinander angrenzend angeordnet sind,
- wobei die Schaufel eine erste Gruppe und mindestens eine weitere Gruppe von Schaufeln bilden,
- wobei die Schaufeln der ersten Gruppe nominale Schaufeln sind, und
- wobei die Schaufeln der mindestens einen weiteren Gruppe erfindungsgemäße Schaufeln gemäß Anspruch 18 sind.

Dabei können die Schaufel A der ersten Gruppe und die Schaufeln B der mindestens einen weiteren Gruppe beispielsweise in einer der folgenden Abfolgen angeordnet sein: AB, 2A2B, 4A2B, 3A2B, 3A1B. Sofern des Weiteren Schaufeln C einer dritten Gruppe vorhanden sind (die beispielsweise in anderer Weise verstimmt sind als die Schaufeln B), kann beispielsweise eine Abfolge 2A1 B2C realisiert sein, wobei die genannten Abfolgen nur beispielhaft zu verstehen sind.

Das Laufrad kann des Weiteren eine gerade oder eine ungerade Anzahl von Schaufeln aufweisen.

In einem weiteren Erfindungsaspekt betrifft die vorliegende Erfindung ein Gasturbinentriebwerk mit einem erfindungsgemäßen Laufrad. Bei dem erfindungsgemäßen Laufrad handelt es sich beispielsweise um einen Fan, ein Laufrad in einer Verdichterstufe oder ein Laufrad in einer Turbinenstufe eines Gasturbinentriebwerks.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse eines Gasturbinentriebwerks, in dem die Schaufel bzw. das Laufrad angeordnet ist. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Gasturbinentriebwerk. Begriffe wie "äußere" oder "innere" beziehen sich auf die radiale Richtung.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks, in dem die vorliegende Erfindung realisierbar ist;
- Figur 2: den grundlegenden geometrischen Aufbau und die Basisbezeichnungen an einem Verdichtergitter;
- Figur 2a: zwei in Umfangsrichtung benachbarte Verdichterschaufeln unter Darstellung des Schaufelkanals zwischen diesen und des engsten Querschnitts des Schaufelkanals;
- Figur 3: die Abhängigkeit des Verlaufs von Verdichtungsstößen vom Massenstrom durch die Schaufelpassage zwischen zwei Laufschaufeln eines transsonischen Schaufelgitters;
- Figur 4: schematisch Schaufeln eines Schaufelgitters im heißen Zustand, wobei eine der Laufschaufeln aufgrund einer Dickenmodifikation im heißen Zustand der Schaufeln eine geänderte Form aufweist;
- Figur 5: eine Laufschaufel unter beispielhafter Darstellung von Bereichen, die für eine effektive Verstimmung der Schaufel eine Dickenänderung erfahren können;
- Figur 6: schematisch die übereinander gelegten Profilelemente einer nominalen Schaufel und einer dickenveränderten Schaufel;
- Figur 7: zwei übereinander gelegte Profilelemente, wobei das eine Profilelement das Profilelement der initial verstimmten Schaufel und das andere Profilelement das im Hinblick auf seinen Schwerpunkt korrigierte Profilelement darstellt;
- Figur 8: zwei übereinander gelegte Profilelemente, wobei das eine Profilelement das Profilelement der initial verstimmten Schaufel und das andere Profilelement das im Hinblick auf seinen Staffelungswinkel korrigierte Profilelement darstellt;
- Figur 9: eine Sequenz, die eine Korrektur der Schwerpunkte der Profilelemente einer initial verstimmten Schaufel in Abhängigkeit von der Schaufelhöhe darstellt;
- Figur 10: eine Sequenz, die eine Korrektur der Staffelungswinkel der Profilelemente einer initial verstimmten Schaufel in Abhängigkeit von der Schaufelhöhe darstellt;
- Figur 11: ein Ablaufdiagramm eines Verfahrens zur Festlegung der Form einer verstimmten Schaufel eines Laufrads mit Korrektur des Staffelungswinkel;
- Figur 12: ein Ablaufdiagramm eines Verfahrens zur Festlegung der Form einer verstimmten Schaufel eines Laufrads mit Korrektur des Staffelungswinkel, das iterativ ausgeführt wird;
- Figur 13: beispielhaft ein Verformungsfeld einer Laufschaufel; und
- Figur 14: ein Ablaufdiagramm eines Verfahrens zur Festlegung der Form einer verstimmten Schaufel eines Laufrads unter Korrektur des Massenschwerpunkts der Profilelemente.

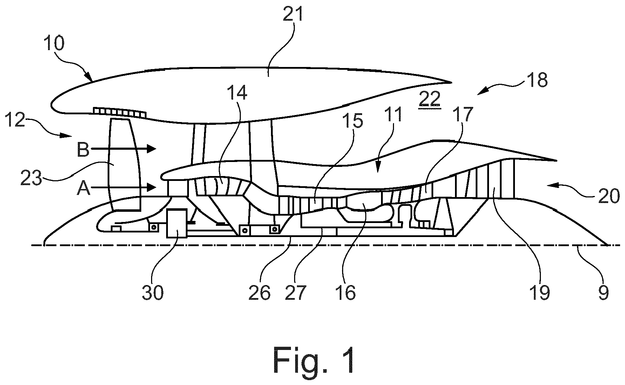

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Im Kontext der vorliegenden Erfindung ist die Ausbildung der Schaufeln mindestens eines Laufrads eines Gasturbinentriebwerks von Bedeutung, wobei es sich um ein Gasturbinentriebwerk gemäß der Figur 1 oder um ein beliebiges anderes Gasturbinentriebwerk handeln kann, beispielsweise auch eines, das kein Getriebe 30 aufweist. Bei dem Laufrad kann es sich um den Fan, ein Laufrad eines Verdichters oder ein Laufrad einer Turbine handeln.

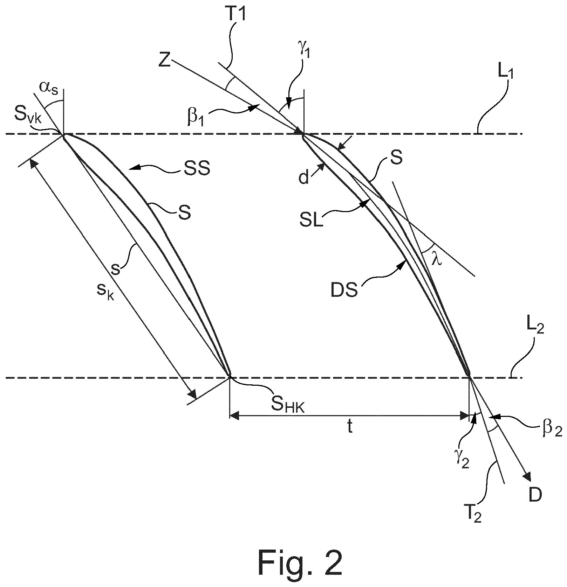

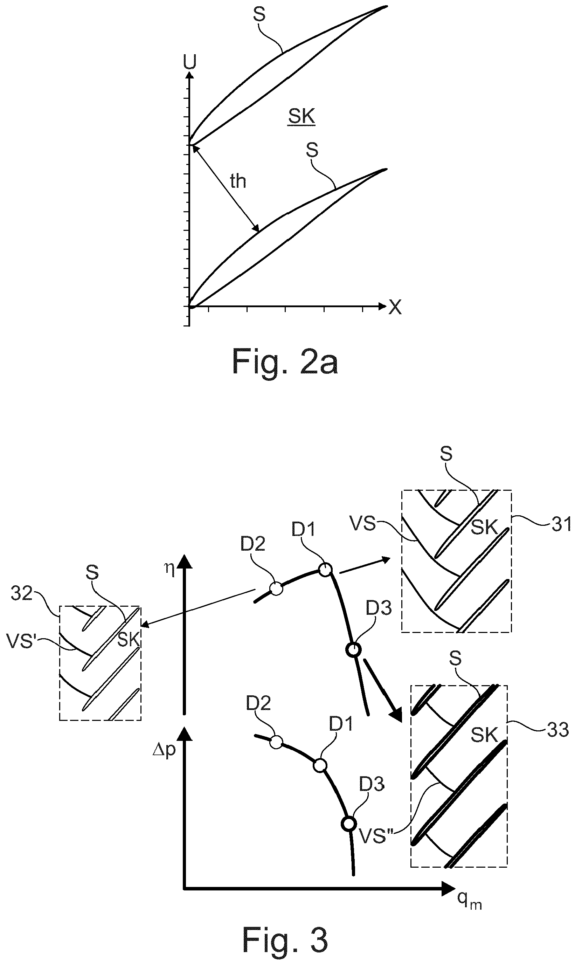

Zunächst wird dabei anhand der Figur 2 der grundlegende Aufbau eines Verdichtergitters beschrieben. Das Verdichtergitter ist in üblicher Darstellung im Meridianschnitt und abgerollt dargestellt. Es umfasst eine Mehrzahl von Schaufeln S, die jeweils eine Vorderkante S_{VK} und eine Hinterkante S_{HK} aufweisen. Die Vorderkanten S_{VK} liegen auf einer gedachten Linie L₁, die Hinterkanten S_{HK} liegen auf einer gedachten Linie L₂. Die Linien L₁ und L₂ verlaufen parallel. Die Schaufeln S umfassen des Weiteren jeweils eine Saugseite SS und eine Druckseite DS. Ihre maximale Profildicke ist mit d angegeben.

Das Verdichtergitter weist eine Gitterteilung t und eine Profilsehne s mit einer Profilsehnenlänge sₖ auf. Die Profilsehne s ist die Verbindungslinie zwischen der Vorderkante S_{VK} und der Hinterkante S_{HK} des Profils. Zwischen der Profilsehne s und der Senkrechten auf der Linie L₁ (wobei die Senkrechte zumindest näherungsweise der durch die Maschinenachse definierten Richtung entspricht) ist der Schaufel-Staffelungswinkel (im folgenden Staffelungswinkel) αₛ gebildet. Der Staffelungswinkel αₛ gibt die Neigung der Schaufeln S an.

Die Schaufeln S weisen eine Skelettlinie SL auf, die auch als Profilmittellinie bezeichnet wird. Diese ist definiert durch die Verbindungslinie der in das Profil einbeschriebenen Kreismittelpunkte. Die Tangente an die Skelettlinie SL an der Vorderkante ist mit T₁ bezeichnet. Die Tangente an die Skelettleitlinie SL an der Hinterkante ist mit T₂ bezeichnet. Der Winkel, unter dem sich die beiden Tangenten T₁, T₂ schneiden, ist der Schaufelwölbungswinkel λ. Die Zuströmrichtung, mit der Gas auf das Gitter zuströmt, ist mit Z und die Abströmrichtung, mit der Gas vom Gitter weg strömt, ist mit D gekennzeichnet. Der Inzidenzwinkel β, ist definiert als der Winkel zwischen der Tangenten T₁ und der Zuströmrichtung Z. Der Deviationswinkel β₂ ist definiert als der Winkel zwischen der Tangenten T₂ und der Abströmrichtung A.

Weiter ist ein Schaufeleintrittswinkel γ₁ definiert als der Winkel zwischen der Tangenten T₁ an die Skelettlinie SL und der Senkrechten auf der Linie L₁. Ein Schaufelaustrittswinkel γ₂ ist definiert als der Winkel zwischen der Tangenten T₂ an die Skelettlinie SL und der Senkrechten auf der Linie L₂. Der Schaufeleintrittswinkel γ₁ wird auch als Blatteintrittswinkel oder als Zuström-Metallwinkel und der Schaufelaustrittswinkel γ₂ auch als Blattaustrittswinkel oder als Abström-Metallwinkel bezeichnet.

Der Schaufeleintrittswinkel γ₁ und der Schaufelaustrittswinkel γ₂ ändern sich beide, wenn der Staffelungswinkel αₛ bei gleichbleibender Form der Schaufeln geändert wird, da eine Änderung des Staffelungswinkels αₛ in einem solchen Fall durch die damit verbundene Neigungsverstellung der Schaufeln die Ausrichtung der Tangenten T₁, T₂ verändert.

Zwischen zwei benachbarten Schaufeln S ist ein Schaufelkanal SK ausgebildet. Dieser weist einen engsten Querschnitt th auf. Dies ist in der Figur 2a schematisch und beispielhaft dargestellt.

Die Figur 3 verdeutlicht die Nachteile, die entstehen, wenn der engste Querschnitt th zwischen den Schaufeln S einer Schaufelreihe außerhalb des Optimums liegt. Die Figur 3 zeigt dabei zum einen das Druckverhältnis Δp zwischen Saugseite und Druckseite einer Schaufel und zum anderen den Wirkungsgrad η in Abhängigkeit vom Massenstrom qₘ. Der Punkt D1 bezeichnet das Optimum bzw. die optimale Auslegung des engsten Querschnitts des Schaufelkanals SK, wie sie bei nominalen Schaufeln gegeben ist. Die optimale Auslegung D1 korrespondiert mit der Teildarstellung 31. Die auftretenden Verdichtungsstöße VS verlaufen nahe der Vorderkante der jeweils angrenzenden Schaufel S. Der Wirkungsgrad η ist optimal, wenn der Stoß nahe der Vorderkante liegt.

Dem Punkt D2 entspricht eine Auslegung, bei der der engste Querschnitt des Schaufelkanals SK kleiner gewählt ist als bei D1. Der Punkt D2 korrespondiert mit der Teildarstellung 32. Der Massenstrom qₘ durch den Schaufelkanal SK ist reduziert und auch der Wirkungsgrad η. Die Verdichtungsstöße VS' sind nach vorne gewandert bzw. werden ausgestoßen. Dem Punkt D3 entspricht eine Auslegung, bei der der engste Querschnitt des Schaufelkanals SK größer gewählt ist als bei D1. Der Massenstrom qₘ durch den Schaufelkanal SK ist zwar erhöht, der Wirkungsgrad η jedoch reduziert. Der Punkt D3 korrespondiert mit der Teildarstellung 33. Die Verdichtungsstöße VS" sind in die Schaufelpassage SK gewandert bzw. werden dort verschluckt.

Es ist anzustreben, den engsten Querschnitt des Schaufelkanals SK stets in das Optimum D1 zu legen. Der engste Querschnitt des Schaufelkanals SK ist dabei abhängig vom Staffelungswinkel.

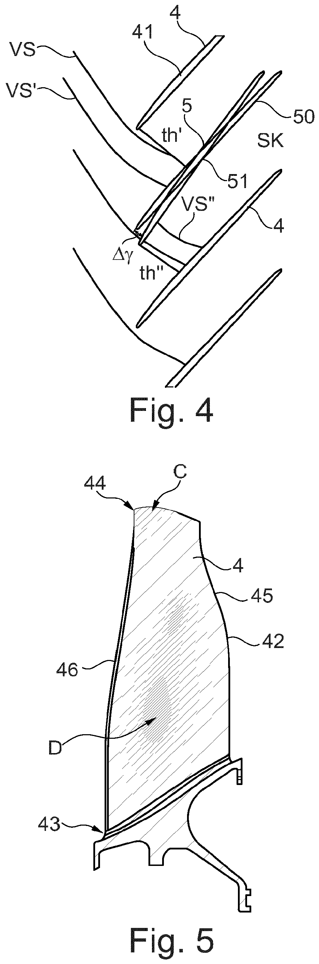

Die Figur 4 verdeutlicht exemplarisch die Folgen, die auftreten können, wenn eine Schaufel im heißen Zustand, d. h. wenn das Laufrad, an dem sie befestigt ist, rotiert, sich aufrichtet und dabei ihren Staffelungswinkel ändert. Eine solche Änderung des Staffelungswinkels kann auftreten, wenn die betrachtete Schaufel keine nominale Schaufel ist, sondern eine verstimmte Schaufel, die in Bezug auf mindestens eines ihrer Profilelemente eine reduzierte oder erhöhte Dicke aufweist. So zeigt die Figur 4 nominale Schaufeln 4 und initial verstimmte Schaufeln 5, die einen Bereich mit gegenüber den nominalen Schaufeln abweichender Dicke aufweisen (in der Figur 4 nicht erkennbar). Wenn solche initial verstimmte Schaufeln 5 sich im heißen Zustand aufrichten und entwinden, kann die Situation auftreten, dass sich der Staffelungswinkel γ ändert. Die Figur 4 zeigt die Änderung des Staffelungswinkel Δγ bei einer initial verstimmten Schaufel 5 und eine damit einhergehende Änderung des geringsten Querschnitts th`, th" in den beiden angrenzenden Schaufelkanälen SK. Die Verdichtungsstöße VS`, VS" wandern im Schaufelkanal mit vergrößertem geringsten Querschnitt th' gegenüber den Verdichtungsstößen VS der nominalen Schaufeln 4 axial nach vorne und werden im Schaufelkanal mit reduziertem geringstem Querschnitt th" verschluckt. Das Resultat ist gemäß der Figur 3 in beiden Fällen ein verschlechterter Wirkungsgrad.

Die Figur 4 verdeutlicht somit, dass Änderungen des aerodynamischen Profils (hier des Staffelungswinkels) den Wirkungsgrad beeinträchtigen. Darüber hinaus kann die Verschiebung der Verdichtungsstöße zu einer zusätzlichen Lärmerzeugung führen.

Die Erfindung strebt daher an, die initial verstimmte Schaufeln 5 im kalten Zustand, d. h. wenn das Laufrad, an dem sie befestigt ist, nicht rotiert, derart zu ändern, dass sie im heißen Zustand den gleichen engsten Querschnitt th bildet und den gleichen Staffelungswinkel γ aufweist wie die nominalen Schaufeln 4. Die initial verstimmte Schaufel 5 nimmt in einem solchen Fall nach ihrer entsprechenden Korrektur im heißen Zustand die Form 50 an.

Es wird darauf hingewiesen, dass die Figur 4 die Schaufeln 4, 5 jeweils im Hinblick auf ein Profilelement 41, 51 zeigt. Ein Profilelement 41, 51 entspricht dabei einem Profilschnitt der Schaufel 4, 5, wobei der Begriff "Profilelement" verdeutlicht, dass es sich nicht um einen infinitesimal dünnen Schnitt handelt, sondern um einen Schnitt endlicher Dicke, so dass die Schaufel 4, 5 durch eine Vielzahl von Profilelementen 41, 51 aufgefädelt wird.

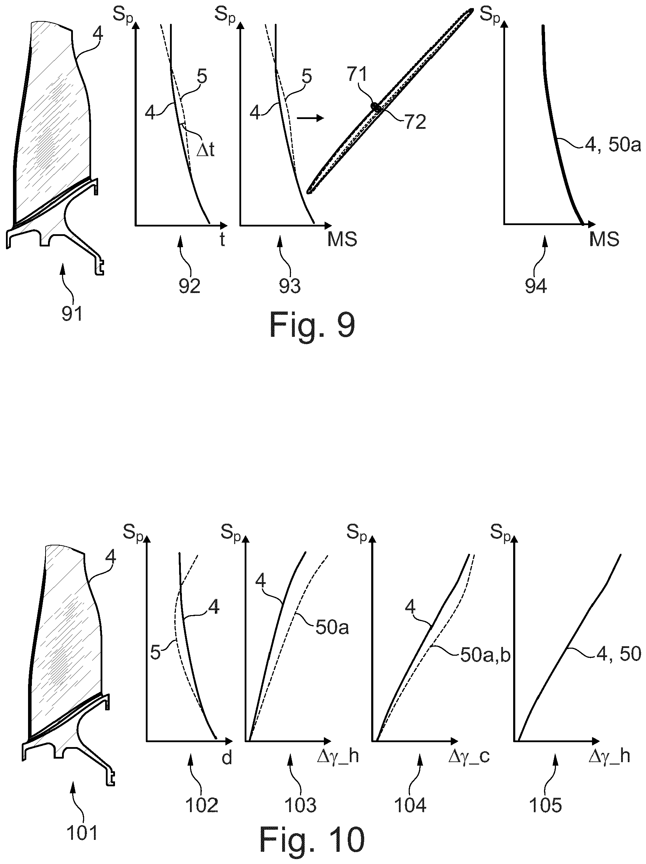

Die dargestellte Änderung des Staffelungswinkels und des engsten Querschnitts des Schaufelkanals kann dabei abhängig von der Spannweite bzw. radialen Höhe der Schaufel unterschiedlich stark ausgeprägt sein, wie anhand der Figur 10 noch erläutert wird. Dabei gilt, dass eine Änderung des Staffelungswinkels nahe der Nabe geringer ausfällt als zur Schaufelspitze hin.

Die Figur 5 zeigt eine nominale Schaufel 4, wobei es sich beispielhaft bei der Schaufel 4 um eine Fanschaufel handelt. Die Schaufel weist in an sich bekannter Weise eine Vorderkante 46, eine Hinterkante 42, eine Nabenbereich 43 und einen Schaufelspitzenbereich 44 auf. Sie umfasst dabei ein Schaufelblatt 45 mit einer Druckseite und einer Saugseite.

Es sind weiter Bereiche C, D dargestellt, in denen eine Änderung der Dicke der Schaufel 4 in besonders effektiver Weise zu einer Verstimmung bzw. Änderung der Eigenfrequenz der Laufschaufel 4 führt. Eine gezielte Verstimmung wird durchgeführt, um bestimmte Schwingungsanregungen des Laufrads zu reduzieren. Die vorliegende Erfindung betrachtet dabei nicht die Art und Weise, wie eine Dickenänderung der Schaufel 4 erfolgt. Sie geht davon aus, dass eine Dickenänderung erfolgt ist. Eine nominale Schaufel 4, die für eine gezielte Verstimmung eine Dickenänderung erfahren hat, wird als initial verstimmte Schaufel 5 bezeichnet.

Für eine gezielte Dickenänderung sind dabei eine Mehrzahl von Maßnahmen und Verfahren bekannt. Eine Variante hierzu sieht vor, dass die Differenz zwischen der Verzerrungsenergie und der kinetischen Energie einer angeregten nominalen Schaufel 4 bestimmt wird und ein Erhöhen oder Reduzieren der Dicke der nominalen Schaufel 4 abhängig von der ermittelten Differenz zwischen der Verzerrungsenergie und der kinetischen Energie in einem betrachteten Bereich erfolgt. Insbesondere wird die Dicke der Schaufel in solchen Bereichen erhöht oder reduziert, in dem die genannte Differenz besonders groß ist.

So gibt beispielsweise der Bereich C der Figur 5 einen Bereich erhöhter kinetischer Energie nach einer Anregung der Schaufel an. Der Bereich D der Figur 5 gibt einen Bereich erhöhter Verzerrungsenergie nach einer Anregung der Schaufel an. Dickenänderungen in diesen Bereichen können in besonders effektiver Weise zu einer gezielten Änderung der Eigenfrequenz der Schaufel 4 führen. Dies ist grundsätzlich in P. Gudmundson: "Tuning of Turbine Blades: A Theoretical Approach", Journal of Engineering for Power, ISSN 0022-0825, Vol. 105, Nr. 2, S. 249-255, 1983, beschrieben. Insbesondere beschreibt die Formel 30 dieser Publikation, die Differenz zwischen der Verzerrungsenergie und der kinetischen Energie auf der Oberfläche einer Struktur zu bestimmen.

Eine Dickenänderung wird dabei gemäß einer Ausführungsvariante derart durchgeführt, dass sie allein auf der Druckseite einer Schaufel erfolgt. Dies hängt damit zusammen, dass insbesondere bei einem Fan die Leistung des transsonischen Abschnitts hauptsächlich von der Krümmung der Saugseite abhängt, so dass es wichtig ist, diese beizubehalten. Andererseits führt dies zu einer gewissen Unwucht der Schaufel, die eine Verformung der Schaufel im heißen Zustand noch verstärkt.

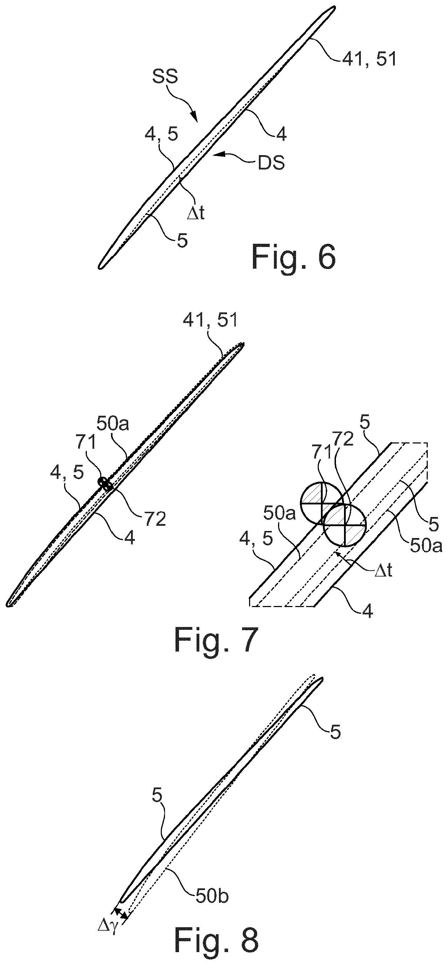

Die Figur 6 zeigt jeweils anhand eines Profilelements 41, 51 eine nominale Schaufel 4 und eine dickenreduzierte und damit verstimmte Schaufel 5, die übereinandergelegt sind, wobei die verstimmte Schaufel 5 auf der Druckseite DS eine um Δt reduzierte Dicke aufweist. Auf der Saugseite SS sind die Profile identisch. Beispielsweise ist die verstimmte Schaufel 5 aus einer nominalen Schaufel 4 gemäß der Figur 5 dadurch entstanden, dass eine Dickenänderung in dem Bereich D der Figur 5 erfolgt ist.

Bevor anhand der Figur 8 auf die bereits erwähnte Änderung des Staffelungswinkels bei der verstimmten Schaufel 5 eingegangen wird, wird zunächst anhand der Figur 7 eine weitere Maßnahme besprochen, wie eine gemäß der Figur 4 unerwünschte Designänderung der verstimmten Schaufel 5 im heißen Zustand verhindert oder zumindest reduziert werden kann.

Hierzu ist zunächst festzustellen, dass jedes Profilelement 41, 51 einen Massenschwerpunkt besitzt. Bei einer homogenen Massenverteilung entspricht dieser dem Flächenschwerpunkt des Profilsschnitts. Wenn nun gemäß der Figur 6 die Dicke einer nominalen Schaufel 4 in bestimmten Bereichen geändert wird, führt dies zu einem veränderten Massenschwerpunkt. Die Figur 7 zeigt in der rechten Darstellung vergrößert den mittigen Bereich der linken Darstellung der Figur 7, der die Massenschwerpunkte angibt. So besitzt die nominale Schaufeln 4 einen Massenschwerpunkt 72. Nach Reduktion der Dicke Δt besitzt die initial verstimmte Schaufel 5 einen geänderten Massenschwerpunkt 71, der gegenüber dem Massenschwerpunkt 72 verschoben ist.

Es ist nun vorgesehen, dass das dickenreduzierte Profilelement derart verschoben wird, dass dessen Massenschwerpunkt wieder auf dem Massenschwerpunkt 72 liegt, somit der Massenschwerpunkt 72 der nominalen Schaufel 4 und der Massenschwerpunkt 71 der initial verstimmten und dann im Hinblick auf seinen Massenschwerpunkt korrigierten Schaufel übereinanderliegen, wobei die initial verstimmte Schaufel 5, die im Hinblick auf ihren Massenschwerpunkt korrigiert ist, als Schaufel 50a bezeichnet wird.

Eine solche Korrektur, die rechnerisch erfolgt, bevor die Schaufel dann hergestellt wird, kann für sämtliche Profilelemente 51 erfolgen, bei denen eine Änderung der Dicke vorgenommen wurde. Es wird darauf hingewiesen, dass die Bestimmung der Massenschwerpunkte 71, 72 und die Verschiebung des Massenschwerpunkts der initial verstimmte Schaufel 5 zur korrigierten Schaufel 50a im kalten Zustand der Schaufel erfolgen kann.

Die Figur 8 zeigt die Änderung des Staffelungswinkels der initial verstimmte Schaufeln 5 um einen Wert Δγ. Diese Änderung erfolgt im kalten Zustand der initial verstimmten Schaufel 5. Die initial verstimmte Schaufel 5, die im Hinblick auf den Staffelungswinkel korrigiert ist, wird als Schaufel 50b bezeichnet. Es wird darauf hingewiesen, dass die Änderung des Staffelungswinkel dadurch erzeugt wird, dass das Profilelement um eine Achse gedreht wird. Die Drehachse kann dabei durch den Massenschwerpunkt des Profilelements gehen, wobei dies nicht notwendigerweise der Fall ist.

Die Änderungen an der initial verstimmten Schaufel 5 im Hinblick auf den Massenschwerpunkt gemäß der Figur 7 (wobei die korrigiert verstimmte Schaufel 50a entsteht) und im Hinblick auf den Staffelungswinkel gemäß der Figur 8 (wobei die korrigiert verstimmte Schaufel 50b entsteht) führen zu einer final verstimmten Schaufel 50, die gemäß der Figur 4 im heißen Zustand die gleiche Form aufweist wie die nominalen Schaufeln 4.

Die Figur 9 zeigt eine Dickenänderung entsprechend der Figur 7 in Abhängigkeit von der Spannweite Sp der Schaufel, die der radialen Höhe der Schaufel entspricht. Die linke Teildarstellung 91 zeigt dabei die nominale Schaufel 4 entsprechend der Figur 5. Diese erfährt zur gezielten Verstimmung eine Dickenänderung. Die entsprechende Dickenänderung ist in der Teildarstellung 92 wiedergegeben, die die Dicke t abhängig von der Spannweite Sp darstellt. Es ist der Verlauf der Schaufeldicke sowohl für die nominalen Schaufeln 4 als auch für die initial verstimmte Schaufel 5 dargestellt. In bestimmten radialen Bereichen liegt eine Dickenänderung Δt der initial verstimmten Schaufel 5 gegenüber der nominalen Schaufel 4 vor. Dabei weist die initial verstimmte Schaufel 5 in einem mittleren Bereich eine erhöhte Dicke und im oberen Bereich eine reduzierte Dicke auf.

Die Teildarstellung 93 zeigt eine Verschiebung des Massenschwerpunkts MS in Abhängigkeit von der Spannweite Sp. Der Grad der Verschiebung entspricht der Dickenänderung gemäß der Teildarstellung 92. Dies ist dadurch begründet, dass in Profilelementen, in denen eine große Dickenänderung erfolgt ist, das entsprechende Profilelement entsprechend stark in seinem Massenschwerpunkt korrigiert wird. In Profileelementen, die keine Dickenänderung erfahren haben, ist auch keine Korrektur des Massenschwerpunkt erforderlich.

Die Teildarstellung 94 zeigt die Massenschwerpunkte MS der nominalen Schaufel 4 und der initial verstimmten, und dann im Hinblick auf den Massenschwerpunkt korrigierten Schaufel 50a in Abhängigkeit von der Spannweite Sp. Die Massenschwerpunkte von nominaler Schaufel 4 und korrigierter Schaufel 50a sind identisch.

Die Figur 10 zeigt eine entsprechende Abfolge im Hinblick auf die Korrektur des Staffelungswinkels. Die Teildarstellung 101 zeigt die nominale Schaufel 4, die zur gezielten Verstimmung eine Dickenänderung erfährt. Die Teildarstellung 102 zeigt die Verformung d der Schaufel in Abhängigkeit von der Spannweite Sp. Diese Verformung korrespondiert gemäß der Teildarstellung 103 mit einer Änderung des Staffelungswinkels, den die verstimmte Schaufel im heißen Zustand erfährt. Der Staffelungswinkel Δγ_h im heißen Zustand ist dabei in Abhängigkeit von der Spannweite Sp dargestellt. Die Teildarstellung 103 zeigt die verstimmte Schaufel dabei nach einer Korrektur entsprechend der Figur 9, weswegen die Verläufe für die Schaufeln 4, 50a verglichen sind. Dieses ist jedoch lediglich optional. Grundsätzlich kann die Korrektur des Staffelungswinkels auch ohne eine Korrektur der Massenschwerpunkte erfolgen. Es ist zu erkennen, dass die Änderung des Staffelungswinkels Δγ_h im heißen Zustand mit zunehmender Spannweite zunimmt.

Die Teildarstellung 104 zeigt die Korrektur des Staffelungswinkels Δγ_c im kalten Zustand der verstimmten Schaufel 50a,b. Der Staffelungswinkel Δγ_c wird dabei über die gesamte Spannweite und damit für sämtliche Profilelemente korrigiert. Die Teildarstellung 105 zeigt den Staffelungswinkel Δγ_h im heißen Zustand sowohl für die nominale Schaufel als auch für die initial verstimmte und anschließend zweifach korrigierte Schaufel 50 (siehe auch Schaufel 50 der Figur 4). Die initial verstimmte Schaufel 5 ist dabei zweifach korrigiert, nämlich zum einen im Hinblick auf die Massenschwerpunkte der einzelnen Profilelemente und zum anderen im Hinblick auf den Staffelungswinkel der einzelnen Profilelemente. Es ist das erwünschte Ergebnis erreicht, nämlich, dass sich die Staffelungswinkel Δγ_h von nominaler Schaufel 4 und der final korrigierten Schaufel 50 nicht unterscheiden.

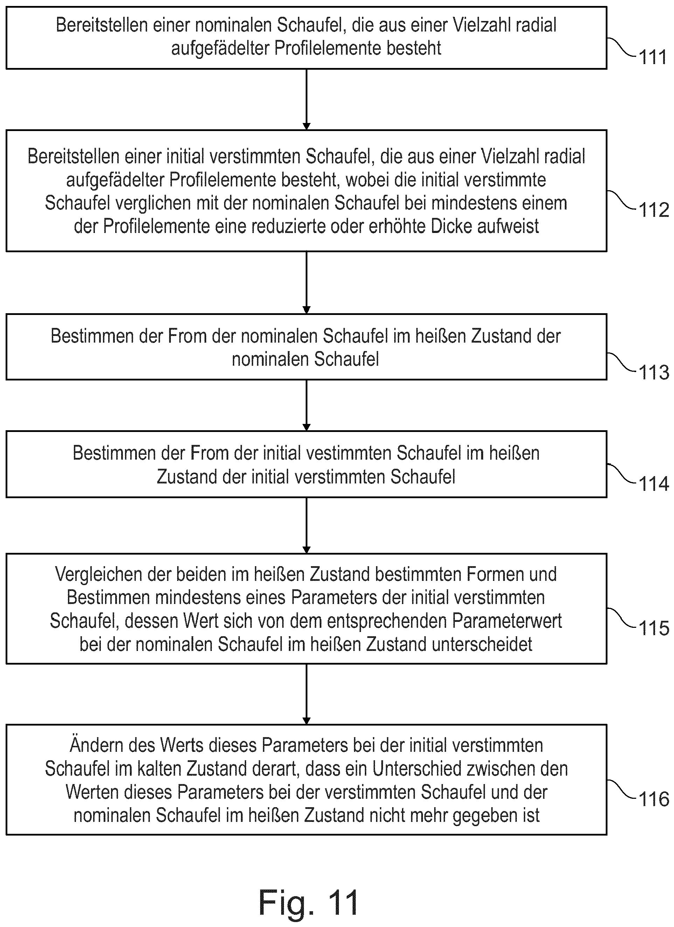

Die Figur 11 zeigt die wesentlichen Verfahrensschritte zur Festlegung der Form der verstimmten Schaufel, wobei die initial verstimmte Schaufel eine zusätzliche Änderung bzw. Korrektur erfährt. Gemäß Schritt 111 wird zunächst eine nominale Schaufel bereitgestellt. Diese umfasst eine Vielzahl radial aufgefädelter Profilelemente. Weiter wird in Schritt 112 eine initial verstimmte Schaufel bereitgestellt, die ebenfalls eine Vielzahl radial aufgefädelter Profilelemente umfasst. Dabei weist die initial verstimmte Schaufel verglichen mit der nominalen Schaufel bei mindestens einem der Profilelemente eine reduzierte oder erhöhte Dicke auf. Beispielsweise wird eine solche Dickenänderung in bestimmten Bereichen auf der Druckseite der Schaufel realisiert.

In den Schritten 113, 114 wird nun die Form der nominalen Schaufel und die Form der initial verstimmten Schaufel im heißen Zustand bestimmt. Dies kann beispielsweise über Berechnungen gemäß der Finite-Elemente-Methode erfolgen. Anschließend werden die beiden im heißen Zustand bestimmten Formen in Schritt 115 miteinander verglichen. Dabei wird, sofern vorhanden, mindestens ein Parameter der initial verstimmten Schaufel bestimmt, dessen Wert sich von dem entsprechenden Parameterwert der nominalen Schaufel im heißen Zustand unterscheidet. Wie erläutert, handelt es sich bei diesem Parameter beispielsweise um den Staffelungswinkel der Schaufel.

In Schritt 116 wird der Wert dieses Parameters bei der initial verstimmten Schaufel im kalten Zustand derart geändert, dass ein Unterschied zwischen den Werten dieses Parameters bei der verstimmten Schaufel und der nominalen Schaufel im heißen Zustand nicht mehr gegeben ist. Beispielsweise wird der Staffelungswinkel bei der initial verstimmten Schaufel im kalten Zustand derart geändert, dass im heißen Zustand die Formen 4, 50 entsprechend der Figur 4 und entsprechend der Teildarstellung 105 der Figur 10 übereinstimmen.

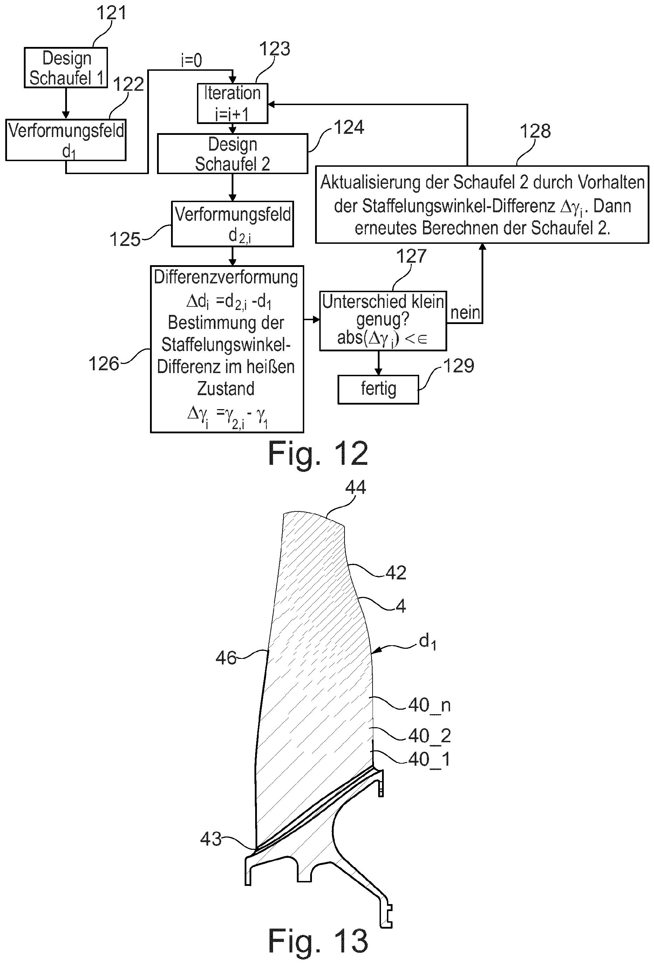

Das in der Figur 11 beschriebene Verfahren kann in einer Ausgestaltung iterativ durchgeführt werden. Dies ist in der Figur 12 beispielhaft dargestellt. Danach wird in Schritt 121 zunächst eine nominale Schaufel mit nominalem Design bereitgestellt, als Schaufel 1 bezeichnet. Zu der nominalen Schaufel wird in Schritt 122 das Verformungsfeld d1 im heißen Zustand der Schaufeln berechnet. Ein solches Verformungsfeld d1 ist beispielhaft in der Figur 13 dargestellt. Das Verformungsfeld umfasst unterschiedliche Bereiche 40-n, in denen die nominale Schaufel 4 im heißen Zustand unterschiedlich verformt ist. Beispielsweise weist sie in einem Bereich 40_1 angrenzend an der Nabe 43 im Wesentlichen keine Verformung auf und nimmt die Verformung in den sich daran anschließenden Bereichen 40-n zur Schaufelspitze 44 und zur Schaufelhinterkante 42 hin zu.

In Schritt 123 wird nun der Index i um den Wert 1 erhöht. Weiter wird in Schritt 124 die initial verstimmte Schaufel bereitgestellt, die Dickenänderungen gegenüber der nominalen Schaufel aufweist. Diese ist als Schaufel 2 bezeichnet. Auch zu der Schaufel 2 wird in Schritt 125 das Verformungsfeld d_{2,i} im heißen Zustand berechnet. Das Verformungsfeld unterscheidet sich dabei von dem Verformungsfeld d1 gemäß der Figur 13 der nominalen Schaufel, d. h. die initial verstimmte Schaufel weist im heißen Zustand eine andere Form auf als die nominale Schaufel. In Schritt 126 wird die Differenzverformung Δdᵢ = d_{2,i} - d₁ bestimmt und daraus für die einzelnen Profilelemente die Differenz des Staffelungswinkels im heißen Zustand ermittelt: Δγᵢ = γ_{2,i} - γ₁. In Schritt 127 wird geprüft, ob der ermittelte Unterschied unterhalb eines Restfehlers ε liegt. Da die initial verstimmte Schaufel bisher nicht korrigiert wurde, wird dies typischerweise nicht der Fall sein. Es wird dann in Schritt 128 die initial verstimmte Schaufel im Hinblick auf die Staffelungswinkel-Differenz Δγᵢ korrigiert, d. h. der Staffelungswinkel der initial verstimmten Schaufel wird im kalten Zustand entsprechend geändert. Das beschriebene Verfahren wird dann erneut in einem weiteren Iterationsschritt durchgeführt. Dabei wird das Design der Schaufel 2 erneut berechnet und erneut die Differenzverformung und die Staffelungswinkel-Differenz ermittelt, gemäß den Schritten 125, 126.

Es wird dann in Schritt 127 erneut geprüft, ob der ermittelte Unterschied unterhalb des Restfehlers ε liegt. Sofern dies der Fall ist, ist das Verfahren gemäß Schritt 129 beendet, d. h. die finale Form der initial verstimmten Schaufeln ist festgelegt. Sofern dies nicht der Fall ist, erfolgt eine weitere Iteration, etc.

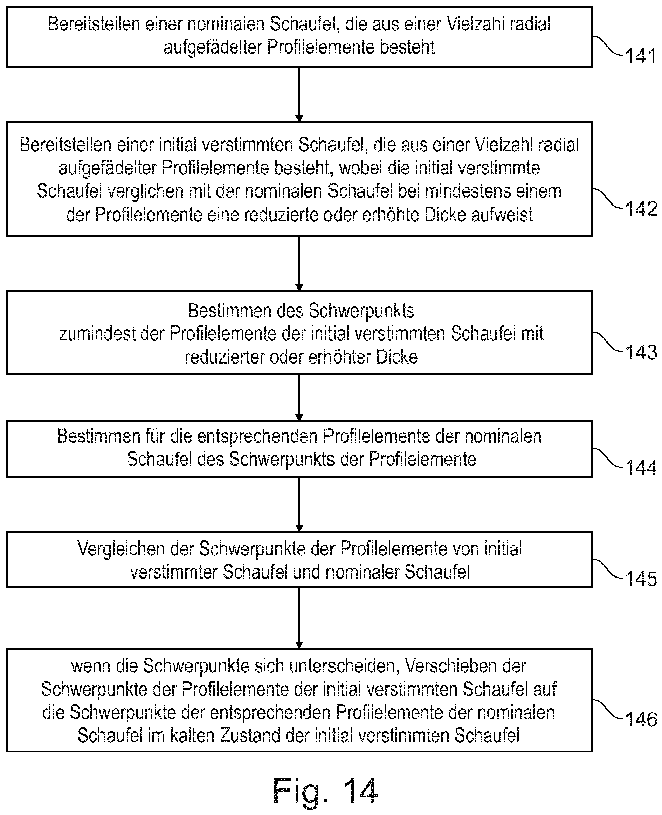

Die Figur 14 zeigt die Verfahrensschritte für die Festlegung der Form einer verstimmten Schaufel für den Fall, dass eine Korrektur der Schwerpunkte entsprechend den Figuren 7 und 9 erfolgt. Eine solche Korrektur kann in Ergänzung zu einer Korrektur des Staffelungswinkels erfolgen. Alternativ kann ausschließlich eine Korrektur der Schwerpunkte vorgenommen werden.

Gemäß Schritt 141 wird zunächst eine nominale Schaufel bereitgestellt. Diese umfasst eine Vielzahl radial aufgefädelter Profilelemente. Weiter wird in Schritt 142 eine initial verstimmte Schaufel bereitgestellt, die ebenfalls eine Vielzahl radial aufgefädelter Profilelemente umfasst. Dabei weist die initial verstimmte Schaufel verglichen mit der nominalen Schaufel bei mindestens einem der Profilelemente eine reduzierte oder erhöhte Dicke auf.

Gemäß Schritt 143 wird zumindest für die Profilelemente mit reduzierter oder erhöhter Dicke der initial verstimmten Schaufel der Schwerpunkt der Profilelemente bestimmt. Ebenso wird in Schritt 144 für die entsprechenden Profilelemente der nominalen Schaufel der Schwerpunkt dieser Profilelemente bestimmt. In Schritt 145 werden die Schwerpunkte der Profilelemente von initial verstimmter Schaufel und nominaler Schaufel verglichen. Sofern die Schwerpunkte sich unterscheiden, was aufgrund der erfolgten Dickenänderung typischerweise der Fall ist, werden gemäß Schritt 146 die Schwerpunkte der Profilelemente der initial verstimmten Schaufel auf die Schwerpunkte der entsprechenden Profilelemente der nominalen Schaufel verschoben. Dies erfolgt bezogen auf den kalten Zustand der initial verstimmten Schaufel. Damit liegt im Hinblick auf die Massenschwerpunkte kein Unterschied mehr zwischen den nominalen Schaufeln und den initial verstimmten und dann im Hinblick auf die Massenschwerpunkte korrigierten Schaufeln vor. Dies bewirkt, dass im heißen Zustand sich ergebende Formänderungen zwischen der nominalen Schaufel und der verstimmten Schaufel geringer ausfallen.

Die erfindungsgemäßen Verfahren ermöglichen die Festlegung der Form einer verstimmten Schaufel eines Laufrads einer Strömungsmaschine. Eine oder mehrere solcher Schaufeln bilden zusammen mit nominalen Schaufeln einen insgesamt verstimmten Schaufelkranz, in dem Schwingungsanregungen des Schaufelrads minimiert sind.

Die Abfolge unterschiedlicher Schaufeln in einem Schaufelkranz kann mittels eines Optimierungsprogrammes ermittelt werden und ist nicht auf das klassische AB-Muster beschränkt. Beispiele für komplexere Abfolgen sind AB, 2A2B, 4A2B, 3A2B, 3A1B und 2A1B2C, wobei beispielsweise Schaufeln A einer ersten Gruppe nominale Schaufeln sind, Schaufeln B einer zweiten Gruppe verstimmte Schaufeln sind, und Schaufeln C einer dritten Gruppe ebenfalls verstimmte Schaufeln sind, die jedoch in anderer Weise verstimmt sind als die Schaufeln B.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Verfahren zur Festlegung der Form einer verstimmten Schaufel eines Laufrads einer Strömungsmaschine, mit den Schritten:
- Bereitstellen (111) einer nominalen Schaufel (4), die eine Vielzahl radial aufgefädelter Profilelemente (41) aufweist,
- Bereitstellen (112) einer initial verstimmten Schaufel (5), die eine Vielzahl radial aufgefädelter Profilelemente (51) aufweist, wobei die initial verstimmte Schaufel (5) verglichen mit der nominalen Schaufel bei mindestens einem der Profilelemente (51) eine reduzierte oder erhöhte Dicke (Δt) aufweist,
- Bestimmen (113) der Form der nominalen Schaufel (4) im heißen Zustand der nominalen Schaufel,
- Bestimmen (114) der Form der initial verstimmten Schaufel (5) im heißen Zustand der initial verstimmten Schaufel,
- Vergleichen (115) der beiden im heißen Zustand bestimmten Formen und Bestimmen mindestens eines Parameters (γ) der initial verstimmten Schaufel (5), dessen Wert sich von dem entsprechenden Parameterwert bei der nominalen Schaufel (4) im heißen Zustand unterscheidet,
- Ändern (116) des Werts dieses Parameters (γ) bei der initial verstimmten Schaufel (5) im kalten Zustand derart, dass ein Unterschied zwischen den Werten dieses Parameters (γ) bei der verstimmten Schaufel (5) und der nominalen Schaufel (4) im heißen Zustand nicht mehr gegeben ist.

2. Verfahren nach Anspruch 1, **dadurch gekennzeichnet, dass** der Parameter der initial verstimmten Schaufel (5), der im heißen Zustand bestimmt wird, der Staffelungswinkel (γ) mindestens eines Profilelements (51) der Schaufel (5) ist, wobei der Staffelungswinkel (γ) der initial verstimmten Schaufel (5) im kalten Zustand dahingehend geändert wird, dass die Änderung des Staffelungswinkels (γ) im heißen Zustand aufgehoben ist.

3. Verfahren nach Anspruch 2, **dadurch gekennzeichnet, dass** der Staffelungswinkel (γ) der initial verstimmten Schaufel (5) im kalten Zustand dahingehend geändert wird, dass er im kalten Zustand um den Betrag (Δγ) geändert wird, um den er sich im heißen Zustand vom Staffelungswinkel (γ) der nominalen Schaufel (4) unterscheidet.

4. Verfahren nach Anspruch 2 oder 3, **dadurch gekennzeichnet, dass** eine Änderung des Staffelungswinkel (γ) der initial verstimmten Schaufel (5) im kalten Zustand iterativ erfolgt, wobei das Verfahren umfasst:
a) in einem ersten Schritt ändern des Staffelungswinkels (γ_{2,1}) der initial verstimmten Schaufel (5) im kalten Zustand um einen ersten Betrag (Δγ₁),
b) Bestimmen des sich daraus ergebenden Staffelungswinkels (γ_{2,i}) der initial verstimmten Schaufel (5) im heißen Zustand,
c) Prüfen, ob die Differenz (Δγᵢ) zwischen dem sich ergebenden Staffelungswinkel (γ_{2,i}) im heißen Zustand und dem Staffelungswinkel (γ₁) der nominalen Schaufel (4) im heißen Zustand bis auf einen Restfehler (ε) gleich Null ist,
d) wenn nein, Anpassen des Betrags der Änderung des Staffelwinkels (γ_{2,i}) der initial verstimmte Schaufeln (5) im kalten Zustand,
e) Wiederholen der Schritte b) bis d), bis die Differenz zwischen dem Staffelungswinkel der verstimmten Schaufel (5) und dem Staffelungswinkel der nominalen Schaufel (4) im heißen Zustand bis auf den Restfehler gleich Null ist.

5. Verfahren nach Anspruch 4, **dadurch gekennzeichnet, dass** der Staffelungswinkel (γ_{2,i}) der verstimmten Schaufel (5) im kalten Zustand um einen Betrag geändert wird, der gleich der Differenz (Δγᵢ) der Staffelungswinkel von verstimmter Schaufel (5) und nominaler Schaufel (4) im heißen Zustand ist.

6. Verfahren nach einem der vorangehenden Ansprüche, **dadurch gekennzeichnet, dass** der Parameter (γ) der initial verstimmten Schaufel (5), dessen Wert sich von dem entsprechenden Parameterwert bei der nominalen Schaufel (4) im heißen Zustand unterscheidet, für sämtliche Profilelemente (51) bestimmt wird und eine Korrektur dieses Parameters (γ) bei der initial verstimmten Schaufel (5) für sämtliche Profilelemente (51) erfolgt.

7. Verfahren nach einem der vorangehenden Ansprüche, **dadurch gekennzeichnet, dass** als weiterer Parameter der initial verstimmten Schaufel (5) für zumindest einige der Profilelemente (51) der Schwerpunkt (71) der initial verstimmten Schaufel (5) bestimmt und mit dem Schwerpunkt (72) des entsprechenden Profilelements (41) der nominalen Schaufel (4) verglichen wird, wobei
- wenn die Schwerpunkte (71, 72) sich unterscheiden, der Schwerpunkt (71) des Profilelements (51) der initial verstimmten Schaufel (5) durch Verschieben des Profilelements (51) auf den Schwerpunkt (72) der nominalen Schaufel (4) im kalten Zustand verschoben wird.

8. Verfahren nach Anspruch 7, **dadurch gekennzeichnet, dass** der Schwerpunkt (71) der Profilelemente (51) der initial verstimmten Schaufel (5) mit dem Schwerpunkt (72) des entsprechenden Profilelements (41) der nominalen Schaufel (4) für zumindest diejenigen Profilelemente (51, 41) verglichen wird, bei denen die initial verstimmte Schaufel (5) eine Dickenänderung (Δt) gegenüber der nominalen Schaufel (4) realisiert, und für diese Profilelemente (51) der Schwerpunkt (71) auf den Schwerpunkt (72) des entsprechenden Profilelements (41) der nominalen Schaufel (4) verschoben wird.

9. Verfahren nach einem der vorangehenden Ansprüche, **dadurch gekennzeichnet, dass** das Bereitstellen (112) einer initial verstimmten Schaufel (5), die verglichen mit der nominalen Schaufel (4) bei mindestens einem der Profilelemente (51) eine reduzierte oder erhöhte Dicke (Δt) aufweist, umfasst, dass die Differenz zwischen der Verzerrungsenergie und der kinetischen Energie einer angeregten nominalen Schaufel bestimmt wird und ein Erhöhen oder Reduzieren der Dicke der nominalen Schaufel (4) abhängig von der ermittelten Differenz zwischen der Verzerrungsenergie und der kinetischen Energie in einem betrachteten Bereich erfolgt.

10. Verfahren nach einem der vorangehenden Ansprüche, **dadurch gekennzeichnet, dass** bei der initial verstimmten Schaufel (5) eine Dickenänderung (Δt) ausschließlich auf der Druckseite der Schaufel (5) erfolgt.

11. Verfahren nach einem der vorangehenden Ansprüche, **dadurch gekennzeichnet, dass** das Verfahren als computerimplementiertes Verfahren ausgeführt wird, wobei die einzelnen Verfahrensschritte berechnet werden und erst nach Festlegung der finalen Form (50) der verstimmten Schaufel (5) diese hergestellt wird.

12. Verfahren zur Festlegung der Form einer verstimmten Schaufel eines Laufrads einer Strömungsmaschine, mit den Schritten:
- Bereitstellen (141) einer nominalen Schaufel (4), die eine Vielzahl radial aufgefädelter Profilelemente (41) aufweist,
- Bereitstellen (142) einer initial verstimmten Schaufel (5), die eine Vielzahl radial aufgefädelter Profilelemente (51) aufweist, wobei die initial verstimmte Schaufel (5) verglichen mit der nominalen Schaufel (4) bei mindestens einem der Profilelemente (51) eine reduzierte oder erhöhte Dicke (Δt) aufweist,
- Bestimmen (143) des Schwerpunkts (71) zumindest der Profilelemente (51) der initial verstimmten Schaufel (5) mit reduzierter oder erhöhter Dicke (Δt),
- Bestimmen (144) für die entsprechenden Profilelemente (41) der nominalen Schaufel (4) des Schwerpunkts (72) der Profilelemente (41),
- Vergleichen (145) der Schwerpunkte (71, 72) der Profilelemente (51, 41) von initial verstimmter Schaufel (5) und nominaler Schaufel (4),
- wenn die Schwerpunkte (71, 72) sich unterscheiden, Verschieben (146) der Schwerpunkte (71) der Profilelemente (51) der initial verstimmten Schaufel (5) auf die Schwerpunkte (72) der entsprechenden Profilelemente (41) der nominalen Schaufel (4) im kalten Zustand der initial verstimmten Schaufel (5).

13. Verfahren nach Anspruch 12, **dadurch gekennzeichnet, dass** zum Verschieben (146) der Schwerpunkte (71) der initial verstimmten Schaufel (5) das jeweilige Profilelement (51) in axialer Richtung und/oder in Umfangsrichtung verschoben wird.

14. Schaufel (1) für ein Laufrad einer Strömungsmaschine, hergestellt durch Ausführen der Schritte des Verfahrens nach einem der Ansprüche 1 bis 11 oder der Schritte des Verfahrens nach einem der Ansprüche 12 oder 13 und anschließendem Herstellen der Schaufel entsprechend der durch die Verfahrensschritte festgelegten Form.

15. Laufrad einer Strömungsmaschine, das aufweist:
- eine Mehrzahl von Schaufeln (4, 5), die in Umfangsrichtung des Laufrads aneinander angrenzend angeordnet sind,
- wobei die Schaufel (4, 5) eine erste Gruppe und mindestens eine weitere Gruppe von Schaufeln bilden,
- wobei die Schaufeln (4) der ersten Gruppe nominale Schaufeln sind, und
- wobei die Schaufeln (5) der mindestens einen weiteren Gruppe Schaufeln gemäß Anspruch 14 sind, wobei insbesondere die Schaufeln (4) der ersten Gruppe und die Schaufeln (5) der mindestens einen weiteren Gruppe in einer der folgenden Abfolgen angeordnet sind: AB, 2A2B, 4A2B, 3A2B, 3A1B, 2A1B2C angeordnet sind.
